# EUROPEAN PATENT SPECIFICATION

(11) **EP 3 407 541 B1**
(45) Date of publication and mention of the grant of the patent: **24.02.2021**
(21) Application number: 16892314.2
(22) Date of filing: 19.09.2016
(51) Int. Cl.: H04L 12/24, H04W 24/00

(54) **METHOD AND DEVICE FOR ANALYZING POOR NETWORK QUALITY PROBLEM**
VERFAHREN UND VORRICHTUNG ZUR ANALYSE DES PROBLEMS VON SCHLECHTER NETZQUALITÄT
PROCÉDÉ ET DISPOSITIF SERVANT À ANALYSER UN PROBLÈME DE QUALITÉ DE RÉSEAU MÉDIOCRE

(30) Priority: 29.02.2016 CN 201610112943
(43) Date of publication of application: 28.11.2018
(73) Proprietor: Huawei Technologies Co., Ltd., Longgang District Shenzhen, Guangdong 518129 (CN)
(72) Inventor: HE, Caifeng, Shenzhen Guangdong 518129 (CN); PAN, Lujia, Shenzhen Guangdong 518129 (CN); LIU, Deti, Shenzhen Guangdong 518129 (CN)
(74) Representative: Gill Jennings & Every LLP
(86) International application number: PCT/CN2016/099395
(87) International publication number: WO 2017/148130

(56) References cited:
- EP-A1- 2 785 098
- EP-A2- 1 711 025
- CN-A- 103 138 963
- CN-A- 103 501 503
- CN-A- 104 683 998
- CN-A- 105 357 699
- US-A1- 2011 319 062

## Description

### TECHNICAL FIELD

The present invention relates to the field of communications technologies, and in particular, to a method and an apparatus for implementing network poor-quality problem diagnosis.

### BACKGROUND

With rapid development of communications technologies and high-speed growth of data services, a user has an increasingly high requirement for network quality. For a purpose of ensuring network quality, a network poor-quality problem needs to be detected in a timely and an effective manner, and network maintenance and optimization need to be performed.

Currently, an overall network status poor-quality problem may be effectively diagnosed by monitoring a key performance indicator (Key Performance Indicators, KPI) and a key quality indicator (Key Quality Indicators, KQI). However, the KPI is usually an important monitorable and measurable parameter at a network layer, and the KQI is a key indicator at a service layer and may be construed as a parameter used for reflecting quality of different services or applications. That is, these two indicators separately evaluate network performance from macroscopic perspectives of the network layer and the service layer, and reflect a measurement on average. The overall network status poor-quality problem may be effectively detected by monitoring deterioration of the two indicators. However, a local problem of a network may be covered up and cannot be effectively located. For example, currently in the network, a non-important KPI is slightly deficient but almost meets a qualification requirement, and an important KPI is very excellent and far exceeds the qualification requirement. According to the measurement on average, the KPIs meet the qualification requirement as a whole, so that it is determined that the overall KPIs of the network meet the requirement. However, the non-important KPI not meeting the requirement cannot be detected.

EP1711025 describes a telecommunications network having a radio access network (RAN) portion and a core network (CN) portion, in which data records are built from messages monitored in the RAN portion, each data record including at least two different predetermined types of field values, such as time, location area, cause indicative of a cause of termination of a transaction within a call for which the data record is built, subscriber identity and at least one type of service.

CN105357699 describes a wireless monitoring system comprising a mobile terminal, data acquisition module, data upload module, data analysis module and control module, wherein the data acquisition module comprises a business Monitoring Data acquisition module.

EP2785098 describes a method and an apparatus for network problem location based on subscriber perception. A server firstly receives and parses a call history record CHR log sent by a network management system, then determines, according to a parsing result, whether a call of a subscriber is a key quality indicator KQI exception event, and locates a location and a cause of the KQI exception event.

### SUMMARY

Embodiments of the present invention provide a method according to claim 1 and an apparatus according to claim 5 and a computer-readable storage medium according to claim 9 for implementing network poor-quality problem diagnosis, to prevent a local network problem from being covered up.

A method for implementing network poor-quality problem diagnosis is provided. In this method, all service data of all users is collected, and poor-quality records are identified based on all the service data of all the users. In this way, a network poor-quality problem that causes user service experience deterioration can be detected in a relatively comprehensive manner. A common characteristic of the poor-quality records is obtained by performing commonality analysis on the poor-quality records, and the network poor-quality problem that causes user service experience deterioration is diagnosed based on the common characteristic of the poor-quality records. This implements network problem detection and diagnosis from microscopic user service experience, and can prevent a local network problem from being covered up.

In a possible design, the service data of all the users may first be grouped, and the poor-quality records are identified based on the grouped service data. A specific implementation process is: The service data of all the users is grouped based on at least one dimension of a user identifier, a service data generation time, a server address, a network address, an access point name, a cell identity, and longitude and latitude information; a candidate poor-quality record is identified from each obtained group of service data; and the poor-quality records are obtained based on the candidate poor-quality record identified from each group of service data. In this way, a problem reflecting poor quality in a current grouping dimension can be obtained, thereby implementing finer-granularity-based grouping and avoiding omission.

The service data may further include but is not limited to a user service experience value, the user identifier, the service data generation time, the server address, the network address, the access point name, the cell identity, and the longitude and latitude information.

It may be understood that content specifically included in the service data may be determined based on dimension information required for grouping the service data of all the users. For example, if the service data is grouped based on the server address, the service data includes the server address.

In another possible design, a candidate poor-quality record may be identified from each obtained group of service data in the following manner, including: sorting the service data by a chronological order of the service data generation time, to obtain a service data sequence, so as to compare service data experience values obtained before and after the service data generation time; determining an inflection point at which a trend change of a user service experience value included in various service data in the service data sequence occurs, where the trend change means that a difference between a statistical characteristic of user service experience values within a current time period and a statistical characteristic of user service experience values within a previous time period is not less than a first preset threshold; dividing the service data sequence into service data sub-sequences by using the inflection point as a demarcation point; determining an average value of user service experience values in each service data sub-sequence; and for each service data sub-sequence, if the average value of the user service experience values is less than a second preset threshold, determining service data in the service data sub-sequence as the candidate poor-quality record.

When the foregoing poor-quality record identification manner and an inflection point analysis technique are used, an overall trend change of user service experience may be captured, stable service experience deterioration may be accurately identified, and accuracy of poor-quality problem detection may be improved.

Optionally, before the service data is sorted by the chronological order of the service data generation time, whether the user service experience value is greater than a third preset threshold is determined, so as to remove service data whose user service experience value is greater than the third preset threshold. This filters out an extreme user service experience value caused by an accidental service experience deterioration phenomenon, reduces misjudgments, and improves accuracy of poor-quality record identification.

In a possible design, the candidate poor-quality records identified from each group of service data may be grouped by the user identifier, to obtain a candidate poor-quality record of each user; a poor-quality user may be identified based on the candidate poor-quality record of each user; and candidate poor-quality records of all poor-quality users may be used as the poor-quality records, so as to further filter out an extreme user service experience value caused by an accidental service experience deterioration phenomenon and improve accuracy of poor-quality record identification.

A distribution characteristic of the candidate poor-quality record of each user may be analyzed to identify the poor-quality user. For example, the poor-quality user may be identified in any one of the following manners, including but certainly not limited to the following manners: (1) If a quantity of candidate poor-quality records of a user exceeds a fourth preset threshold (for example, exceeds three records) in a specified time window (for example, five minutes), and a proportion of the quantity of candidate poor-quality records of the user to all service data obtained in the time window exceeds a fifth preset threshold (for example, 20%), the user is a poor-quality user; and (2) if there is a candidate poor-quality record of a same user in each of a specified quantity of consecutive time windows, the user is a poor-quality user. For example, if the specified time window is five minutes and there is a candidate poor-quality record of a same user in each of three consecutive time windows, the user is a poor-quality user.

After the candidate poor-quality record in each group of data is identified, the distribution characteristic of the candidate poor-quality record of each user is analyzed to determine the poor-quality user. In this way, a user with non-significantly distributed candidate poor-quality records can be filtered out, so as to identify a final poor-quality record and reduce misjudgments.

It may be understood that the first preset threshold, the second preset threshold, the third preset threshold, the fourth preset threshold, and the fifth preset threshold in this embodiment of the present invention are used for distinguishing between specified thresholds mainly for ease of description and ease of understanding, and do not constitute a limitation on a specific name of a corresponding threshold.

An apparatus for implementing network poor-quality problem diagnosis is also provided. The apparatus for implementing network poor-quality problem diagnosis has a corresponding function of performing the method for implementing network poor-quality problem diagnosis according to the first aspect. The function may be implemented by hardware, or may be implemented by executing corresponding software by hardware. The hardware or software includes one or more modules corresponding to the foregoing function. For example, the apparatus for implementing network poor-quality problem diagnosis includes an obtaining unit and a processing unit. The obtaining unit is configured to obtain service data of all users, where the service data includes a user service experience value. The processing unit is configured to: identify poor-quality records based on the service data of all the users obtained by the obtaining unit, where the poor-quality records are service data representing that the user service experience value is deteriorated; obtain a common characteristic of the poor-quality records by performing commonality analysis on the poor-quality records; and diagnose, based on the common characteristic of the poor-quality records, a network poor-quality problem that causes user service experience deterioration.

An apparatus for implementing network poor-quality problem diagnosis is also provided. The apparatus for implementing network poor-quality problem diagnosis includes a processor and a memory. The memory stores a computer readable program. The processor performs, by running the program in the memory, the method for implementing network poor-quality problem diagnosis.

A computer storage medium is also provided, and is configured to store a computer software instruction used by the foregoing apparatus for implementing network poor-quality problem diagnosis. The computer software instruction includes a program used to perform the method for implementing network poor-quality problem diagnosis.

### BRIEF DESCRIPTION OF DRAWINGS

FIG. 1 is an architectural diagram of a communications system applied to an embodiment of the present invention;
FIG. 2 is a flowchart of a method for implementing network poor-quality problem diagnosis according to an embodiment of the present invention;
FIG. 3 is a flowchart of an implementation of poor-quality record identification according to an embodiment of the present invention;
FIG. 4 is a flowchart of a specific implementation of poor-quality record identification according to an embodiment of the present invention;
FIG. 5 is a schematic diagram of an inflection point of a user service experience value trend according to an embodiment of the present invention;
FIG. 6 is a flowchart of another specific implementation of poor-quality record identification according to an embodiment of the present invention;
FIG. 7 is a schematic structural diagram of an apparatus for implementing network poor-quality problem diagnosis according to an embodiment of the present invention; and
FIG. 8 is a schematic structural diagram of another apparatus for implementing network poor-quality problem diagnosis according to an embodiment of the present invention.

### DESCRIPTION OF EMBODIMENTS

The following clearly describes the technical solutions in the embodiments of the present invention with reference to the accompanying drawings in the embodiments of the present invention.

The terms "system" and "network" may be used interchangeably in this application. The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

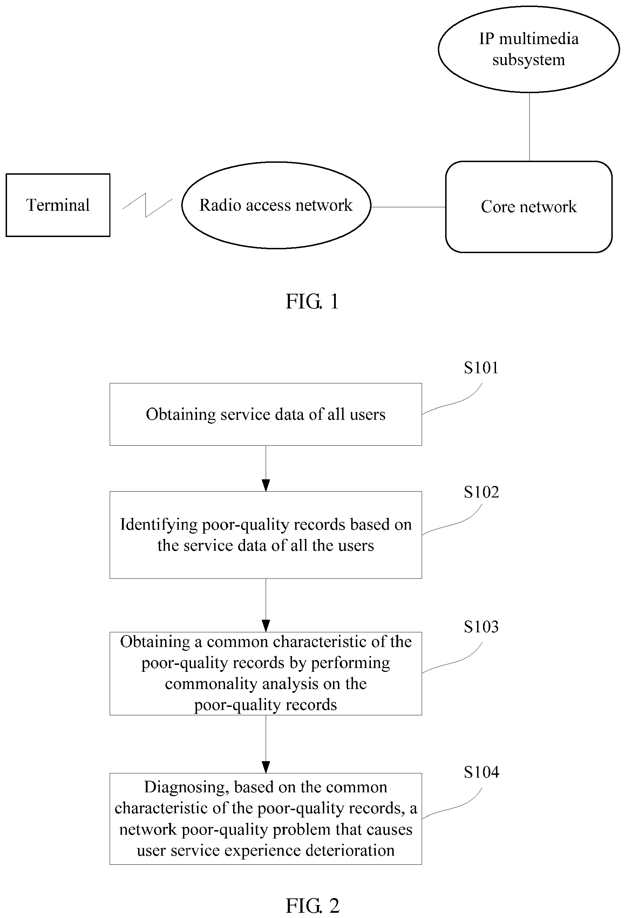

A method and an apparatus for implementing network poor-quality problem diagnosis provided in the embodiments of the present invention may be applied to a communications network shown in FIG. 1. A terminal in FIG. 1 accesses an IP multimedia subsystem (IP Multimedia Subsystem, IMS) through a radio access network (Radio Access Network, RAN) and a core network (Core Network, CN).

It should be understood that, the technical solutions in the embodiments of the present invention may be applied to various communications systems, for example, a Global System for Mobile Communications (Global System of Mobile Communication GSM) system, a Code Division Multiple Access (Code Division Multiple Access, CDMA) system, a Wideband Code Division Multiple Access (Wideband Code Division Multiple Access, WCDMA) system, general packet radio service (General Packet Radio Service, GPRS), a Long Term Evolution (Long Term Evolution, LTE) system, a Long Term Evolution Advanced (Advanced Long Term Evolution, LTE-A) system, or a Universal Mobile Telecommunication System (Universal Mobile Telecommunications System, UMTS).

A terminal in the embodiments of the present invention may be a fixed or mobile terminal, and may also be referred to as a mobile station (Mobile Station, MS) in GSM and CDMA IX and referred to as user equipment (User Equipment, UE) in WCDMA and LTE. The terminal may be a device such as a cellular phone, or another wireless communications device, a personal communications system device, a personal navigation device, a personal information manager, a personal digital assistant, a laptop device, or an appropriate mobile device that can receive a wireless communication and/or navigation signal.

The embodiments of the present invention provide a method for implementing network poor-quality problem diagnosis based on service data of all users in a communications network for which a poor-quality problem is to be diagnosed, so as to detect, in a more comprehensive manner, a network poor-quality problem that causes user service experience deterioration, implement diagnosis, and prevent a local network problem from being covered up.

FIG. 2 shows an implementation flowchart of a method for implementing network poor-quality problem diagnosis according to an embodiment of the present invention. As shown in FIG. 2, the method includes:
S101: Obtain service data of all users.

A piece of service data is generated for any data service operation performed by a user in a communications network. Each piece of service data includes but is not limited to a user identifier, a service data generation time, a server address, a network address, an access point name (Access Point Name, APN), a cell identity, longitude and latitude information, and a user service experience value, as shown in Table 1.

**Table 1**

| User identifier | Service data generation time | Server IP | Network IP | APN | Cell identity | Longitude | Latitude | User service experience |
|---|---|---|---|---|---|---|---|---|
| 46001276 6957678 | 2015/5/21 11:53 | 61.135. 185.17 | 116.79.22 2.67 | 3GNET | 20841 | 121.413374 | 31.220319 | 147.3577143 |
| 46001276 6960969 | 2015/5/21 9:55 | 180.97. 182.135 | 116.79.22 1.104 | 3GNET | 25172 | 121.407916 | 31.242235 | 450.4857143 |
| 46001276 6960969 | 2015/5/21 11:31 | 180.97. 182.135 | 220.206.1 29.100 | 3GNET | 25172 | 121.417643 | 31.237436 | 260.348 |
| 46001277 2946085 | 2015/5/21 22:22 | 140.207 .54.68 | 116.79.22 2.104 | 3GNET | 20722 | 121.387977 | 31.211857 | 1497.594483 |
| 46001277 2958562 | 2015/5/21 1:41 | 112.65. 203.48 | 116.79.22 2.69 | 3GNET | 20282 | 121.378814 | 31.212879 | 1234.3 |
| 46001277 2981288 | 2015/5/21 21:15 | 114.111 .109.46 | 220.206.1 29.97 | 3GNET | 20512 | 121.404651 | 31.214125 | 568.7377778 |

Service data obtained in this embodiment of the present invention may be usually understood as data of a data service.

It should be understood that all the users in this embodiment of the present invention are usually all users in a communications network for which a poor-quality problem is to be diagnosed. For example, if a poor-quality problem of a communications network in a region A is to be diagnosed, the communications network for which a poor-quality problem is to be diagnosed is the communications network in the region A, and all the users are all users in the communications network in the region A.

The user service experience value can visually reflect a network quality status. In this embodiment of the present invention, to implement network poor-quality problem diagnosis, the service data includes at least the user service experience value.

S102: Identifying poor-quality records based on the service data of all the users.

In this embodiment of the present invention, the poor-quality records are service data representing that the user service experience value is deteriorated.

S103: Obtaining a common characteristic of the poor-quality records by performing commonality analysis on the poor-quality records.

In this embodiment of the present invention, commonality analysis may be performed on the identified poor-quality records by using an algorithm such as frequent pattern mining, to obtain the common characteristic of the poor-quality records.

S104: Diagnosing, based on the common characteristic of the poor-quality records, a network poor-quality problem that causes user service experience deterioration.

In this embodiment of the present invention, diagnosis of the network poor-quality problem that causes user service experience deterioration includes but is not limited to a geographical location of a network with a poor-quality problem, a service type, and a service data generation time period, or may include confidence in network quality problem diagnosis. The confidence is used to reflect credibility of a diagnosis conclusion or a diagnosis result, and may be a probability value.

In this embodiment of the present invention, the service data of the users may reflect service experience of the users in a real-time and accurate manner. In addition, in this embodiment of the present invention, the poor-quality records are identified based on the obtained service data of all the users, and the network poor-quality problem is diagnosed based on commonality of the identified poor-quality records. This implements network poor-quality problem diagnosis from microscopic user service experience, can detect, in a relatively comprehensive manner, the network poor-quality problem that causes user service experience deterioration, prevents a local network problem from being covered up, and improves accuracy of network poor-quality problem diagnosis.

Optionally, in this embodiment of the present invention, the obtained service data of all the users may be grouped based on an actual service scenario requirement and a different dimension. For example, all the service data of all the users may be grouped based on at least one dimension of the user identifier, the service data generation time, the server address, the network address, the access point name, the cell identity, and the longitude and latitude information. A different data group reflects a data analysis granularity required in a current service scenario. The poor-quality records are identified based on each obtained group of service data. In this way, a problem reflecting poor quality in a current grouping dimension can be obtained, thereby implementing finer-granularity-based grouping and avoiding omission.

It may be understood that content specifically included in the service data may be determined based on dimension information required for grouping the service data of all the users. For example, if the service data is grouped based on the server address, the service data includes the server address.

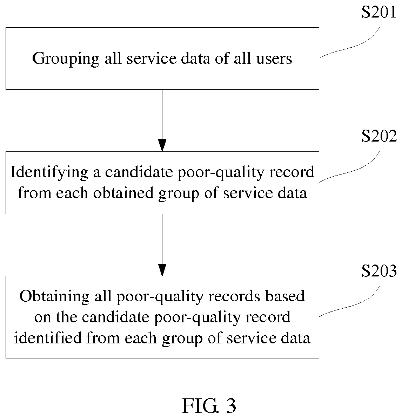

Optionally, in this embodiment of the present invention, a method process shown in FIG. 3 may be used for identifying the poor-quality records. The method process includes the following steps.

S201: Grouping all service data of all users based on at least one dimension of a user identifier, a service data generation time, a server address, a network address, an access point name, a cell identity, and longitude and latitude information.

S202: Identifying a candidate poor-quality record from each obtained group of service data.

S203: Obtaining all poor-quality records based on the candidate poor-quality record identified from each group of service data.

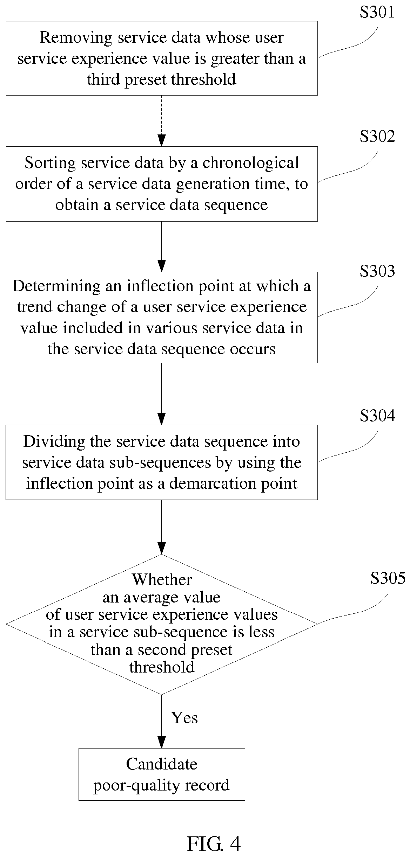

Optionally, in this embodiment of the present invention, a method process shown in FIG. 4 may be used for identifying the poor-quality record from each obtained group of service data. As shown in FIG. 4, the method process includes the following steps.

S301: Removing service data whose user service experience value is greater than a third preset threshold.

In this embodiment of the present invention, whether the user service experience value is greater than a third preset threshold a is determined, so as to remove the service data whose user service experience value is greater than the third preset threshold a. This filters out an extreme user service experience value caused by an accidental service experience deterioration phenomenon, reduces misjudgments, and improves accuracy of poor-quality record identification.

It should be noted that S301 is an optional step. That is, when relatively high accuracy is required for poor-quality record identification, step S301 may be selected and performed.

S302: Sorting the service data by a chronological order of the service data generation time, to obtain a service data sequence.

In this embodiment of the present invention, if step S301 is performed, remaining service data obtained after the service data whose user service experience value is greater than the third preset threshold is removed is sorted by the chronological order of the service data generation time. In this embodiment of the present invention, after the service data is sorted by the chronological order of the service data generation time, service data experience values obtained before and after the service data generation time may be compared.

S303: Determining an inflection point at which a trend change of a user service experience value included in various service data in the service data sequence occurs.

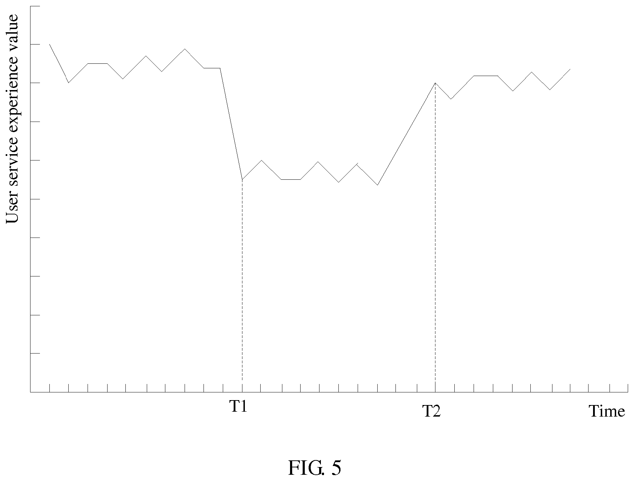

In this embodiment of the present invention, an inflection point analysis method may be used to identify inflection point data of the trend change in the service data sequence. The trend change means that a difference between a statistical characteristic of user service experience values within a current time period and a statistical characteristic of user service experience values within a previous time period is not less than a specified threshold. The statistical characteristic includes an average value, a variance, a median, and the like. For ease of description, the specified threshold is referred to as a first preset threshold in the following. The first preset threshold may be set based on an actual requirement. With the first preset threshold, an obvious difference between the statistical characteristic of the user service experience values within the current time period and the statistical characteristic of the user service experience values within the previous time period may be subjectively observed. For example, as shown in FIG. 5, a user service experience value at a time point T1 is obviously less than all user service experience values within a previous time period, and a user service experience value at a time point T2 is obviously greater than all user service experience values within a previous time period. That is, a trend change of the user service experience values in a data sequence occurs at the time point T1 and the time point T2. Therefore, the time point T1 and the time point T2 are inflection points at which the trend change of the user service experience values occurs.

S304: Dividing the service data sequence into service data sub-sequences by using the inflection point as a demarcation point.

Each service data sub-sequence includes at least one piece of service data.

S305: Determining an average value of user service experience values included in service data in each service data sub-sequence, determine whether the average value of the user service experience values is less than a second preset threshold, determine service data whose average value of service experience values is less than the second preset threshold in a service data sub-sequence as the candidate poor-quality record, and determine service data whose average value of service experience values is not less than the second preset threshold in a service data sub-sequence as a normal record.

In this embodiment of the present invention, the method process shown in FIG. 4 is executed for each obtained group of service data, to identify the candidate poor-quality record in each group of service data. Based on the candidate poor-quality record identified from each group of service data, all the poor-quality records are obtained.

In this embodiment of the present invention, extreme point filtering and inflection point analysis techniques are used in combination, so that an overall trend change of user service experience may be captured, stable service experience deterioration may be accurately identified, an accidental service experience deterioration phenomenon may be filtered out, misjudgments may be reduced, and accuracy of poor-quality problem detection may be improved.

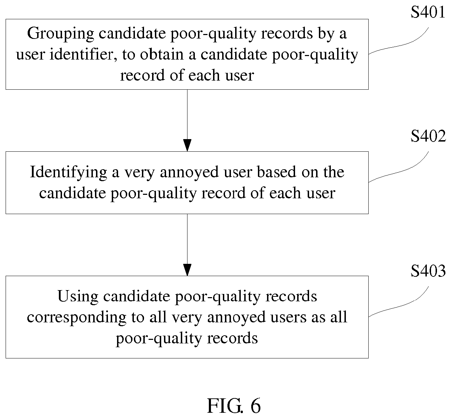

In this embodiment of the present invention, a method process shown in FIG. 6 may be used for obtaining all the poor-quality records based on the candidate poor-quality record identified from each group of service data. As shown in FIG. 6, the method process includes the following steps.

S401: Grouping the candidate poor-quality records by the user identifier, to obtain a candidate poor-quality record of each user.

In this embodiment of the present invention, the candidate poor-quality record identified from each group of service data may be combined. The combined may be understood as summarization. Then, the combined candidate poor-quality records are grouped by the user identifier, to obtain the candidate poor-quality record of each user.

S402: Identifying a poor-quality user based on the candidate poor-quality record of each user.

In this embodiment of the present invention, a distribution characteristic of the candidate poor-quality record of each user may be analyzed to identify the poor-quality user. For example, the poor-quality user may be identified in any one of the following manners, including but certainly not limited to the following manners:
(1) If a quantity of candidate poor-quality records of a user exceeds a fourth preset threshold (for example, exceeds three records) in a specified time window (for example, five minutes), and a proportion of the quantity of candidate poor-quality records of the user to all service data obtained in the time window exceeds a fifth preset threshold (for example, 20%), the user is a poor-quality user; and
(2) if there is a candidate poor-quality record of a same user in each of a specified quantity of consecutive time windows, the user is a poor-quality user. For example, if the specified time window is five minutes and there is a candidate poor-quality record of a same user in each of three consecutive time windows, the user is a poor-quality user.

S403: Using candidate poor-quality records of all poor-quality users as all the poor-quality records.

In this embodiment of the present invention, after the candidate poor-quality record in each group of data is identified, the distribution characteristic of the candidate poor-quality record of each user is analyzed to determine the poor-quality user. In this way, a user with non-significantly distributed candidate poor-quality records can be filtered out, so as to identify a final poor-quality record and reduce misjudgments.

It should be noted that the first preset threshold, the second preset threshold, the third preset threshold, the fourth preset threshold, and the fifth preset threshold in this embodiment of the present invention are used for distinguishing between specified thresholds mainly for ease of description and ease of understanding, and do not constitute a limitation on a specific name of a corresponding threshold.

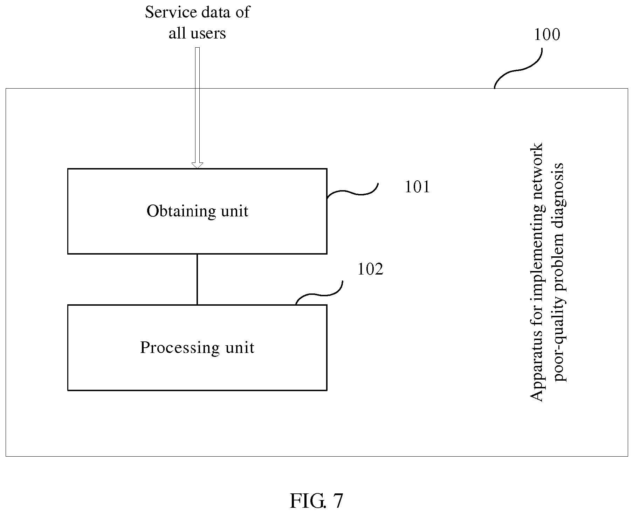

Based on the method for implementing network poor-quality problem diagnosis provided in the foregoing embodiment, an embodiment of the present invention further provides an apparatus 100 for implementing network poor-quality problem diagnosis. FIG. 7 shows a schematic structural diagram of the apparatus 100 for implementing network poor-quality problem diagnosis provided in this embodiment of the present invention. As shown in FIG. 7, the apparatus 100 for implementing network poor-quality problem diagnosis includes an obtaining unit 101 and a processing unit 102.

The obtaining unit 101 is configured to obtain service data of all users, where the service data includes a user service experience value.

The processing unit 102 is configured to: identify poor-quality records based on the service data of all the users obtained by the obtaining unit 101, where the poor-quality records are service data representing that the user service experience value is deteriorated; obtain a common characteristic of the poor-quality records by performing commonality analysis on the poor-quality records; and diagnose, based on the common characteristic of the poor-quality records, a network poor-quality problem that causes user service experience deterioration.

In this embodiment of the present invention, the apparatus 100 for implementing network poor-quality problem diagnosis performs, based on the service data of all the users, the method for implementing network poor-quality problem diagnosis, so as to detect, in a more comprehensive manner, a network poor-quality problem that causes user service experience deterioration, implement diagnosis, and prevent a local network problem from being covered up.

The processing unit 102 may identify the poor-quality records based on the service data of all the users in the following manner:
grouping the service data of all the users based on at least one dimension of a user identifier, a service data generation time, a server address, a network address, an access point name, a cell identity, and longitude and latitude information; identifying a candidate poor-quality record from each obtained group of service data; and obtaining the poor-quality records based on the candidate poor-quality record identified from each group of service data. In this way, a problem reflecting poor quality in a current grouping dimension can be obtained, thereby implementing finer-granularity-based grouping and avoiding omission.

It may be understood that in this embodiment of the present invention, the service data obtained by the obtaining unit 101 may further include but is not limited to the user identifier, the service data generation time, the server address, the network address, the access point name, the cell identity, and the longitude and latitude information, and content specifically included in the service data may be determined based on dimension information required for grouping the service data of all the users. For example, if the service data is grouped based on the server address, the service data includes the server address.

The processing unit 102 may identify the candidate poor-quality record from each obtained group of service data in the following manner:
sorting the service data by a chronological order of the service data generation time, to obtain a service data sequence; determining an inflection point at which a trend change of a user service experience value included in various service data in the service data sequence occurs, where the trend change means that a difference between a statistical characteristic of user service experience values within a current time period and a statistical characteristic of user service experience values within a previous time period is not less than a first preset threshold; dividing the service data sequence into service data sub-sequences by using the inflection point as a demarcation point, where each service data sub-sequence includes at least one piece of service data; determining an average value of user service experience values in each service data sub-sequence; and for each service data sub-sequence, if the average value of the user service experience values is less than a second preset threshold, determining service data in the service data sub-sequence as the candidate poor-quality record.

When the foregoing poor-quality record identification manner and an inflection point analysis technique are used, an overall trend change of user service experience may be captured, stable service experience deterioration may be accurately identified, and accuracy of poor-quality problem detection may be improved.

Optionally, the processing unit 102 is further configured to:
before sorting the service data by the chronological order of the service data generation time, remove service data whose user service experience value is greater than a third preset threshold, so as to filter out an extreme user service experience value caused by an accidental service experience deterioration phenomenon, reduce misjudgments, and improve accuracy of poor-quality record identification.

Optionally, the processing unit 102 may obtain, in the following manner, the poor-quality records based on the candidate poor-quality record identified from each group of service data:
grouping the candidate poor-quality records by the user identifier, to obtain a candidate poor-quality record of each user; identifying a poor-quality user based on the candidate poor-quality record of each user; and using candidate poor-quality records of all poor-quality users as the poor-quality records.

The processing unit 102 may identify the poor-quality user based on the candidate poor-quality record of each user in the following manner:
if a quantity of candidate poor-quality records of a user exceeds a fourth preset threshold in a specified time window, and a proportion of the quantity of candidate poor-quality records of the user to all service data obtained in the time window exceeds a fifth preset threshold, identifying the user as a poor-quality user; or if there is a candidate poor-quality record of a same user in each of a specified quantity of consecutive time windows, identifying the user as a poor-quality user.

In this embodiment of the present invention, after the candidate poor-quality record in each group of data is identified, a distribution characteristic of the candidate poor-quality record of each user is analyzed to determine the poor-quality user. In this way, a user with non-significantly distributed candidate poor-quality records can be filtered out, so as to identify a final poor-quality record and reduce misjudgments.

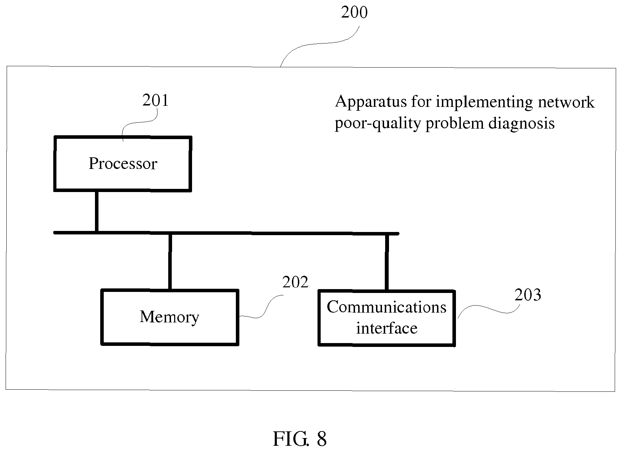

An embodiment of the present invention further provides an apparatus 200 for implementing network poor-quality problem diagnosis. FIG. 8 shows a schematic structural diagram of an apparatus 200 for implementing network poor-quality problem diagnosis provided in another embodiment of the present invention. The apparatus 200 for implementing network poor-quality problem diagnosis uses a general-purpose computer system structure, including a bus, a processor 201, a memory 202, and a communications interface 203. Program code used to implement the solutions of the present invention is stored in the memory 202, and is controlled and executed by the processor 201.

The bus may include a path, to transport information between components of a computer.

The processor 201 may be a general-purpose central processing unit (CPU), a microprocessor, an application-specific integrated circuit (application-specific integrated circuit, ASIC), or one or more integrated circuits used to control execution of a program of the solutions in the present invention. One or more memories included in a computer system may be a read-only memory (read-only memory, ROM) or a static storage device that is of another type and that can store static information and an instruction, a random access memory (random access memory, RAM) or a dynamic storage device that is of another type and that can store static information and an instruction, or may be a magnetic disk storage. These memories are connected to the processor by using the bus.

The communications interface 203 may use an apparatus such as any transceiver to implement bidirectional communication with another device or a communications network, for example, an Ethernet, a radio access network (RAN), or a wireless local area network (WLAN).

The memory 202, for example, a RAM, stores an operating system and a program that executes the solutions in the present invention. The operating system is a program used to control running of another program and manage system resources.

The program stored in the memory 202 is used to instruct the processor 201 to perform a method for implementing network poor-quality problem diagnosis, including: obtaining service data of all users; identifying poor-quality records based on all the service data of all the users, so that a network poor-quality problem that causes user service experience deterioration can be detected in a relatively comprehensive manner; obtaining a common characteristic of the poor-quality records by performing commonality analysis on the poor-quality records; and diagnosing, based on the common characteristic of the poor-quality records, the network poor-quality problem that causes user service experience deterioration. This implements network problem detection and diagnosis from microscopic user service experience, and can prevent a local network problem from being covered up.

It may be understood that the apparatus 200 for implementing network poor-quality problem diagnosis in this embodiment may be configured to perform all functions in the foregoing method embodiment. For a specific implementation process, refer to a related description in the foregoing method embodiment. Details are not described herein again.

An embodiment of the present invention further provides a computer storage medium, configured to store a computer software instruction used by the apparatus for implementing network poor-quality problem diagnosis shown in FIG. 7 or FIG. 8. The computer storage medium includes a program used to execute the foregoing method embodiment. After the stored program is executed, a network poor-quality problem may be diagnosed.

Obviously, a person skilled in the art can make various modifications and variations to the present invention without departing from the scope of the present invention as solely defined by the appended claims.

## Claims

1. A method for implementing network poor-quality problem diagnosis, comprising:
obtaining (S101) service data of all users, wherein the service data comprises a user service experience value;
identifying (SI02) poor-quality records based on the service data of all the users, wherein the poor-quality records are service data representing that the user service experience value is deteriorated;
obtaining (SI03) a common characteristic of the poor-quality records by performing commonality analysis on the poor-quality records; and
diagnosing (SI04), based on the common characteristic of the poor-quality records, a network poor-quality problem that causes user service experience deterioration;
**characterized in that**;
the identifying poor-quality records based on the service data of all the users comprises:
grouping (S201) the service data of all the users based on at least one dimension of a user identifier, a service data generation time, a server address, a network address, an access point name, a cell identity, and longitude and latitude information;
identifying (S202) a candidate poor-quality record from each obtained group of service data; and
obtaining (S203) the poor-quality records based on the candidate poor-quality record identified from each group of service data; and
the identifying a candidate poor-quality record from each obtained group of service data comprises:
performing the following steps on each obtained group of service data:
sorting (S302) the service data by a chronological order of the service data generation time, to obtain a service data sequence;
determining (S303) an inflection point at which a trend change of a user service experience value comprised in various service data in the service data sequence occurs, wherein the trend change means that a difference between a statistical characteristic of user service experience values within a current time period and a statistical characteristic of user service experience values within a previous time period is not less than a first preset threshold;
dividing (S304) the service data sequence into service data sub-sequences by using the inflection point as a demarcation point, wherein each service data sub-sequence comprises at least one piece of service data;
determining (S305) an average value of user service experience values in each service data sub-sequence; and
for each service data sub-sequence, if the average value of the user service experience values is less than a second preset threshold, determining service data in the service data sub-sequence as the candidate poor-quality record.

2. The method according to claim 1, wherein before the sorting the service data by a chronological order of the service data generation time, the method further comprises:
removing (S301) service data whose user service experience value is greater than a third preset threshold.

3. The method according to any one of claims 1 or 2, wherein the obtaining the poor-quality records based on the candidate poor-quality record identified from each group of service data comprises:
grouping (S401) the candidate poor-quality records by the user identifier, to obtain a candidate poor-quality record of each user;
identifying (S402) a poor-quality user based on the candidate poor-quality record of each user; and
using (S403) candidate poor-quality records of all poor-quality users as the poor-quality records.

4. The method according to claim 3, wherein the identifying a poor-quality user based on the candidate poor-quality record of each user comprises:
if a quantity of candidate poor-quality records of a user exceeds a fourth preset threshold in a specified time window, and a proportion of the quantity of candidate poor-quality records of the user to all service data obtained in the time window exceeds a fifth preset threshold, identifying the user as a poor-quality user; or
if there is a candidate poor-quality record of a same user in each of a specified quantity of consecutive time windows, identifying the user as a poor-quality user.

5. An apparatus (100) for implementing network poor-quality problem diagnosis, comprising:
an obtaining unit (101), configured to obtain service data of all users, wherein the service data comprises a user service experience value; and
a processing unit (102), configured to: identify poor-quality records based on the service data of all the users obtained by the obtaining unit, wherein the poor-quality records are service data representing that the user service experience value is deteriorated; obtain a common characteristic of the poor-quality records by performing commonality analysis on the poor-quality records; and diagnose, based on the common characteristic of the poor-quality records, a network poor-quality problem that causes user service experience deterioration;
**characterized in that**:
the processing unit (102) identifies the poor-quality records based on the service data of all the users in the following manner:
grouping the service data of all the users based on at least one dimension of a user identifier, a service data generation time, a server address, a network address, an access point name, a cell identity, and longitude and latitude information;
identifying a candidate poor-quality record from each obtained group of service data; and
obtaining the poor-quality records based on the candidate poor-quality record identified from each group of service data; and the processing unit (102) identifies the candidate poor-quality record from each obtained group of service data in the following manner:
performing the following steps on each obtained group of service data:
sorting the service data by a chronological order of the service data generation time, to obtain a service data sequence;
determining an inflection point at which a trend change of a user service experience value comprised in various service data in the service data sequence occurs, wherein the trend change means that a difference between a statistical characteristic of user service experience values within a current time period and a statistical characteristic of user service experience values within a previous time period is not less than a first preset threshold;
dividing the service data sequence into service data sub-sequences by using the inflection point as a demarcation point, wherein each service data sub-sequence comprises at least one piece of service data;
determining an average value of user service experience values in each service data sub-sequence; and
for each service data sub-sequence, if the average value of the user service experience values is less than a second preset threshold, determining service data in the service data sub-sequence as the candidate poor-quality record.

6. The apparatus (100) according to claim 5, wherein the processing unit (102) is further configured to:
before sorting the service data by the chronological order of the service data generation time, remove service data whose user service experience value is greater than a third preset threshold.

7. The apparatus (100) according to any one of claims 5 or 6, wherein the processing unit (102) is configured to obtain, in the following manner, the poor-quality records based on the candidate poor-quality record identified from each group of service data:
grouping the candidate poor-quality records by the user identifier, to obtain a candidate poor-quality record of each user;
identifying a poor-quality user based on the candidate poor-quality record of each user; and
using candidate poor-quality records of all poor-quality users as the poor-quality records.

8. The apparatus (100) according to claim 7, wherein the processing unit (102) identifies the poor-quality user based on the candidate poor-quality record of each user in the following manner:
if a quantity of candidate poor-quality records of a user exceeds a fourth preset threshold in a specified time window, and a proportion of the quantity of candidate poor-quality records of the user to all service data obtained in the time window exceeds a fifth preset threshold, identifying the user as a poor-quality user; or
if there is a candidate poor-quality record of a same user in each of a specified quantity of consecutive time windows, identifying the user as a poor-quality user.

9. A computer-readable storage medium comprising instructions which, when executed by a computer, cause the computer to carry out the method of any one of claims 1-4.

## Patentansprüche

1. Verfahren zum Implementieren einer Diagnose des Problems von schlechter Netzqualität, umfassend:
Erhalten (S101) von Dienstdaten aller Benutzer, wobei die Dienstdaten einen Benutzerdiensterfahrungswert umfassen;
Identifizieren (S102) von Datensätzen von schlechter Qualität basierend auf den Dienstdaten aller Benutzer, wobei die Datensätze von schlechter Qualität Dienstdaten sind, die eine Verschlechterung des Benutzerdiensterfahrungswerts darstellen;
Erhalten (S103) einer gemeinsamen Eigenschaft der Datensätze von schlechter Qualität durch Durchführen einer Gemeinsamkeitsanalyse bei den Datensätzen von schlechter Qualität und
Diagnostizieren (S 104), basierend auf der gemeinsamen Eigenschaft der Datensätze von schlechter Qualität, eines Problems von schlechter Netzqualität, das eine Benutzerdiensterfahrungsverschlechterung bewirkt;
**dadurch gekennzeichnet, dass**:
das Identifizieren von Datensätzen von schlechter Qualität basierend auf den Dienstdaten aller Benutzer umfasst:
Gruppieren (S201) der Dienstdaten aller Benutzer basierend auf zumindest einer Dimension eines Benutzeridentifikators, einer Dienstdatenerzeugungszeit, einer Serveradresse, einer Netzadresse, eines Zugangspunktnamens, einer Zellidentität und Längen- und Breiteninformationen;
Identifizieren (S202) eines möglichen Datensatzes von schlechter Qualität aus jeder erhaltenen Gruppe von Dienstdaten und
Erhalten (S203) der Datensätze von schlechter Qualität basierend auf dem möglichen Datensatz von schlechter Qualität, der aus jeder Gruppe von Dienstdaten identifiziert wird; und
das Identifizieren eines möglichen Datensatzes von schlechter Qualität aus jeder erhaltenen Gruppe von Dienstdaten umfasst:
Durchführen der folgenden Schritte bei jeder erhaltenen Gruppe von Dienstdaten:
Sortieren (S302) der Dienstdaten in chronologischer Reihenfolge der Dienstdatenerzeugungszeit, um eine Dienstdatensequenz zu erhalten;
Bestimmen (S303) eines Wendepunkts, an dem eine Trendwende eines Benutzerdiensterfahrungswerts, der in verschiedenen Dienstdaten in der Dienstdatensequenz enthalten ist, eintritt, wobei die Trendwende bedeutet, dass ein Unterschied zwischen einer statistischen Eigenschaft von Benutzerdiensterfahrungswerten innerhalb eines aktuellen Zeitraums und einer statistischen Eigenschaft von Benutzerdiensterfahrungswerten innerhalb eines vorhergehenden Zeitraums nicht kleiner als ein erster vorgegebener Schwellwert ist;
Teilen (S304) der Dienstdatensequenz in Dienstdatenuntersequenzen durch Verwenden des Wendepunkts als einen Abgrenzungspunkt, wobei jede Dienstdatenuntersequenz zumindest ein Dienstdatenelement umfasst;
Bestimmen (S305) eines Durchschnittswerts von Benutzerdiensterfahrungswerten in jeder Dienstdatenuntersequenz; und
für jede Dienstdatenuntersequenz, wenn der Durchschnittswert der Benutzerdiensterfahrungswerte kleiner als ein zweiter vorgegebener Schwellwert ist, Bestimmen von Dienstdaten in der Dienstdatenuntersequenz als den möglichen Datensatz von schlechter Qualität.

2. Verfahren nach Anspruch 1, wobei, vor dem Sortieren der Dienstdaten in chronologischer Reihenfolge der Dienstdatenerzeugungszeit, das Verfahren ferner umfasst:
Entfernen (S301) von Dienstdaten, deren Benutzerdiensterfahrungswert größer als ein dritter vorgegebener Schwellwert ist.

3. Verfahren nach einem der Ansprüche 1 oder 2, wobei das Erhalten der Datensätze von schlechter Qualität basierend auf dem möglichen Datensatz von schlechter Qualität, der aus jeder Gruppe von Dienstdaten identifiziert wird, umfasst:
Gruppieren (S401) der möglichen Datensätze von schlechter Qualität nach dem Benutzeridentifikator, um einen möglichen Datensatz von schlechter Qualität jedes Benutzers zu erhalten;
Identifizieren (S402) eines Benutzers von schlechter Qualität basierend auf dem möglichen Datensatz von schlechter Qualität jedes Benutzers und
Verwenden (S403) von möglichen Datensätzen von schlechter Qualität aller Benutzer von schlechter Qualität als die Datensätze von schlechter Qualität.

4. Verfahren nach Anspruch 3, wobei das Identifizieren eines Benutzers von schlechter Qualität basierend auf dem möglichen Datensatz von schlechter Qualität jedes Benutzers umfasst:
wenn eine Menge von möglichen Datensätzen von schlechter Qualität eines Benutzers einen vierten vorgegebenen Schwellwert in einem vorgegebenen Zeitfenster überschreitet und ein Verhältnis der Menge von möglichen Datensätzen von schlechter Qualität des Benutzers zu allen Dienstdaten, die in dem Zeitfenster erhalten werden, einen fünften vorgegebenen Schwellwert überschreitet, Identifizieren des Benutzers als einen Benutzer von schlechter Qualität; oder
wenn ein möglicher Datensatz von schlechter Qualität eines gleichen Benutzers in jedem von einer vorgegebenen Menge von aufeinanderfolgenden Zeitfenstern vorhanden ist, Identifizieren des Benutzers als einen Benutzer von schlechter Qualität.

5. Einrichtung (100) zum Implementieren einer Diagnose des Problems von schlechter Netzqualität, umfassend:
eine Erhaltungseinheit (101), die zum Erhalten von Dienstdaten aller Benutzer ausgelegt ist, wobei die Dienstdaten einen Benutzerdiensterfahrungswert umfassen; und
eine Verarbeitungseinheit (102), die ausgelegt ist zum: Identifizieren von Datensätzen von schlechter Qualität basierend auf den Dienstdaten aller Benutzer, die durch die Erhaltungseinheit erhalten werden, wobei die Datensätze von schlechter Qualität Dienstdaten sind, die eine Verschlechterung des Benutzerdiensterfahrungswerts darstellen; Erhalten einer gemeinsamen Eigenschaft der Datensätze von schlechter Qualität durch Durchführen einer Gemeinsamkeitsanalyse bei den Datensätzen von schlechter Qualität und Diagnostizieren, basierend auf der gemeinsamen Eigenschaft der Datensätze von schlechter Qualität, eines Problems von schlechter Netzqualität, das eine Benutzerdiensterfahrungsverschlechterung bewirkt;
**dadurch gekennzeichnet, dass**:
die Verarbeitungseinheit (102) die Datensätze von schlechter Qualität basierend auf den Dienstdaten aller Benutzer auf die folgende Weise identifiziert:
Gruppieren der Dienstdaten aller Benutzer basierend auf zumindest einer Dimension eines Benutzeridentifikators, einer Dienstdatenerzeugungszeit, einer Serveradresse, einer Netzadresse, eines Zugangspunktnamens, einer Zellidentität und Längen- und Breiteninformationen;
Identifizieren eines möglichen Datensatzes von schlechter Qualität aus jeder erhaltenen Gruppe von Dienstdaten und
Erhalten der Datensätze von schlechter Qualität basierend auf dem möglichen Datensatz von schlechter Qualität, der aus jeder Gruppe von Dienstdaten identifiziert wird;
und die Verarbeitungseinheit (102) den möglichen Datensatz von schlechter Qualität aus jeder erhaltenen Gruppe von Dienstdaten auf die folgende Weise identifiziert:
Durchführen der folgenden Schritte bei jeder erhaltenen Gruppe von Dienstdaten:
Sortieren der Dienstdaten in chronologischer Reihenfolge der Dienstdatenerzeugungszeit, um eine Dienstdatensequenz zu erhalten;
Bestimmen eines Wendepunkts, an dem eine Trendwende eines Benutzerdiensterfahrungswerts, der in verschiedenen Dienstdaten in der Dienstdatensequenz enthalten ist, eintritt, wobei die Trendwende bedeutet, dass ein Unterschied zwischen einer statistischen Eigenschaft von Benutzerdiensterfahrungswerten innerhalb eines aktuellen Zeitraums und einer statistischen Eigenschaft von Benutzerdiensterfahrungswerten innerhalb eines vorhergehenden Zeitraums nicht kleiner als ein erster vorgegebener Schwellwert ist;
Teilen der Dienstdatensequenz in Dienstdatenuntersequenzen durch Verwenden des Wendepunkts als einen Abgrenzungspunkt, wobei jede Dienstdatenuntersequenz zumindest ein Dienstdatenelement umfasst;
Bestimmen eines Durchschnittswerts von Benutzerdiensterfahrungswerten in jeder Dienstdatenuntersequenz; und
für jede Dienstdatenuntersequenz, wenn der Durchschnittswert der Benutzerdiensterfahrungswerte kleiner als ein zweiter vorgegebener Schwellwert ist, Bestimmen von Dienstdaten in der Dienstdatenuntersequenz als den möglichen Datensatz von schlechter Qualität.

6. Einrichtung (100) nach Anspruch 5, wobei die Verarbeitungseinheit (102) ferner ausgelegt ist zum:
vor dem Sortieren der Dienstdaten in der chronologischen Reihenfolge der Dienstdatenerzeugungszeit, Entfernen von Dienstdaten, deren Benutzerdiensterfahrungswert größer als ein dritter vorgegebener Schwellwert ist.

7. Einrichtung (100) nach einem der Ansprüche 5 oder 6, wobei die Verarbeitungseinheit (102) zum Erhalten der Datensätze von schlechter Qualität basierend auf dem möglichen Datensatz von schlechter Qualität, der aus jeder Gruppe von Dienstdaten identifiziert wird, auf die folgende Weise ausgelegt ist:
Gruppieren der möglichen Datensätze von schlechter Qualität nach dem Benutzeridentifikator, um einen möglichen Datensatz von schlechter Qualität jedes Benutzers zu erhalten;
Identifizieren eines Benutzers von schlechter Qualität basierend auf dem möglichen Datensatz von schlechter Qualität jedes Benutzers und
Verwenden von möglichen Datensätzen von schlechter Qualität aller Benutzer von schlechter Qualität als die Datensätze von schlechter Qualität.

8. Einrichtung (100) nach Anspruch 7, wobei die Verarbeitungseinheit (102) den Benutzer von schlechter Qualität basierend auf dem möglichen Datensatz von schlechter Qualität jedes Benutzers auf die folgende Weise identifiziert:
wenn eine Menge von möglichen Datensätzen von schlechter Qualität eines Benutzers einen vierten vorgegebenen Schwellwert in einem vorgegebenen Zeitfenster überschreitet und ein Verhältnis der Menge von möglichen Datensätzen von schlechter Qualität des Benutzers zu allen Dienstdaten, die in dem Zeitfenster erhalten werden, einen fünften vorgegebenen Schwellwert überschreitet, Identifizieren des Benutzers als einen Benutzer von schlechter Qualität; oder
wenn ein möglicher Datensatz von schlechter Qualität eines gleichen Benutzers in jedem von einer vorgegebenen Menge von aufeinanderfolgenden Zeitfenstern vorhanden ist, Identifizieren des Benutzers als einen Benutzer von schlechter Qualität.

9. Computerlesbares Speichermedium, umfassend Anweisungen, die bei Ausführung durch einen Computer, den Computer dazu veranlassen, das Verfahren nach einem der Ansprüche 1-4 auszuführen.

## Revendications

1. Procédé de mise en œuvre d'un diagnostic de problème de qualité de réseau médiocre, comprenant :
l'obtention (S 101) de données de service de tous les utilisateurs, les données de service comprenant une valeur d'expérience de service d'utilisateur ;
l'identification (S 102) d'enregistrements de qualité médiocre sur la base des données de service de tous les utilisateurs, les enregistrements de qualité médiocre étant des données de service indiquant que la valeur d'expérience de service d'utilisateur est détériorée ;
l'obtention (S103) d'une caractéristique commune des enregistrements de qualité médiocre en effectuant une analyse des points communs sur les enregistrements de qualité médiocre ; et
le diagnostic (S 104), sur la base de la caractéristique commune des enregistrements de qualité médiocre, d'un problème de qualité de réseau médiocre qui entraîne une détérioration de l'expérience de service d'utilisateur ;
**caractérisé en ce que** ;
l'identification des enregistrements de qualité médiocre sur la base des données de service de tous les utilisateurs comprend :
le regroupement (S201) des données de service de tous les utilisateurs sur la base d'au moins une dimension d'un identifiant d'utilisateur, d'un temps de génération de données de service, d'une adresse de serveur, d'une adresse de réseau, d'un nom de point d'accès, d'une identité de cellule et d'informations de longitude et de latitude ;
l'identification (S202) d'un enregistrement de qualité médiocre candidat à partir de chaque groupe de données de service obtenu ; et
l'obtention (S203) des enregistrements de qualité médiocre sur la base de l'enregistrement de qualité médiocre candidat identifié à partir de chaque groupe de données de service ; et
l'identification d'un enregistrement de qualité médiocre candidat à partir de chaque groupe de données de service obtenu comprend :
la réalisation des étapes suivantes pour chaque groupe de données de service obtenu :
le tri (S302) des données de service par ordre chronologique du temps de génération de données de service, pour obtenir une séquence de données de service ;
la détermination (S303) d'un point d'inflexion auquel se produit un changement de tendance d'une valeur d'expérience de service d'utilisateur comprise dans diverses données de service dans la séquence de données de service, le changement de tendance signifiant qu'une différence entre une caractéristique statistique des valeurs d'expérience de service d'utilisateur dans une période de temps actuelle et une caractéristique statistique des valeurs d'expérience de service d'utilisateur dans une période de temps précédente n'est pas inférieure à un premier seuil prédéfini ;
la division (S304) de la séquence de données de service en sous-séquences de données de service en utilisant le point d'inflexion comme point de démarcation, chaque sous-séquence de données de service comprenant au moins un élément de données de service ;
la détermination (S305) d'une valeur moyenne des valeurs d'expérience de service d'utilisateur dans chaque sous-séquence de données de service ; et
pour chaque sous-séquence de données de service, si la valeur moyenne des valeurs d'expérience de service d'utilisateur est inférieure à un deuxième seuil prédéfini, la détermination des données de service dans la sous-séquence de données de service comme étant l'enregistrement de qualité médiocre candidat.

2. Procédé selon la revendication 1, avant le tri des données de service par ordre chronologique du temps de génération de données de service, le procédé comprenant en outre :
la suppression (S301) des données de service dont la valeur d'expérience de service d'utilisateur est supérieure à un troisième seuil prédéfini.

3. Procédé selon l'une quelconque des revendications 1 et 2, l'obtention des enregistrements de qualité médiocre sur la base de l'enregistrement de qualité médiocre candidat identifié à partir de chaque groupe de données de service comprenant :
le regroupement (S401) des enregistrements de qualité médiocre candidats par l'identifiant de l'utilisateur, pour obtenir un enregistrement de qualité médiocre candidat de chaque utilisateur ;
l'identification (S402) d'un utilisateur de qualité médiocre sur la base de l'enregistrement de qualité médiocre candidat de chaque utilisateur ; et
l'utilisation (S403) des enregistrements de qualité médiocre candidats de tous les utilisateurs de qualité médiocre comme enregistrements de qualité médiocre.

4. Procédé selon la revendication 3, l'identification d'un utilisateur de qualité médiocre sur la base de l'enregistrement de qualité médiocre candidat de chaque utilisateur comprenant :
si une quantité d'enregistrements de qualité médiocre candidats d'un utilisateur dépasse un quatrième seuil prédéfini dans une fenêtre temporelle spécifiée, et si une proportion de la quantité d'enregistrements de qualité médiocre candidats de l'utilisateur par rapport à toutes les données de service obtenues dans la fenêtre temporelle dépasse un cinquième seuil prédéfini, l'identification de l'utilisateur comme étant un utilisateur de qualité médiocre ; ou
s'il existe un enregistrement de qualité médiocre candidat d'un même utilisateur dans chacune d'une quantité spécifiée de fenêtres temporelles consécutives, l'identification de l'utilisateur comme un utilisateur de qualité médiocre.

5. Appareil (100) pour la mise en œuvre d'un diagnostic de problème de qualité de réseau médiocre, comprenant :
une unité d'obtention (101), configurée pour obtenir des données de service de tous les utilisateurs, les données de service comprenant une valeur d'expérience de service d'utilisateur ; et
une unité de traitement (102), configurée pour : identifier des enregistrements de qualité médiocre sur la base des données de service de tous les utilisateurs obtenues par l'unité d'obtention, les enregistrements de qualité médiocre étant des données de service indiquant que la valeur d'expérience de service d'utilisateur est détériorée ;
obtenir une caractéristique commune des enregistrements de qualité médiocre en effectuant une analyse des points communs sur les enregistrements de qualité médiocre ; et diagnostiquer, sur la base de la caractéristique commune des enregistrements de qualité médiocre, un problème de qualité de réseau médiocre qui entraîne une détérioration de l'expérience de service d'utilisateur ;
**caractérisé en ce que** :
l'unité de traitement (102) identifie les enregistrements de qualité médiocre sur la base des données de service de tous les utilisateurs de la manière suivante :
le regroupement des données de service de tous les utilisateurs sur la base d'au moins une dimension d'un identifiant d'utilisateur, d'un temps de génération de données de service, d'une adresse de serveur, d'une adresse de réseau, d'un nom de point d'accès, d'une identité de cellule et d'informations de longitude et de latitude ;
l'identification d'un enregistrement de qualité médiocre candidat à partir de chaque groupe de données de service obtenu ; et
l'obtention des enregistrements de qualité médiocre sur la base de l'enregistrement de qualité médiocre candidat identifié à partir de chaque groupe de données de service ;
et l'unité de traitement (102) identifie l'enregistrement de qualité médiocre candidat à partir de chaque groupe de données de service obtenu de la manière suivante :
la réalisation des étapes suivantes pour chaque groupe de données de service obtenu :
le tri des données de service par ordre chronologique du temps de génération de données de service, afin d'obtenir une séquence de données de service ;
la détermination d'un point d'inflexion auquel se produit un changement de tendance d'une valeur d'expérience de service d'utilisateur comprise dans diverses données de service dans la séquence de données de service, le changement de tendance signifiant qu'une différence entre une caractéristique statistique des valeurs d'expérience de service d'utilisateur dans une période de temps actuelle et une caractéristique statistique des valeurs d'expérience de service d'utilisateur dans une période de temps précédente n'est pas inférieure à un premier seuil prédéfini ;
la division de la séquence de données de service en sous-séquences de données de service en utilisant le point d'inflexion comme point de démarcation, chaque sous-séquence de données de service comprenant au moins un élément de données de service ;
la détermination d'une valeur moyenne des valeurs d'expérience de service d'utilisateur dans chaque sous-séquence de données de service ; et
pour chaque sous-séquence de données de service, si la valeur moyenne des valeurs d'expérience de service d'utilisateur est inférieure à un deuxième seuil prédéfini, la détermination des données de service dans la sous-séquence de données de service comme étant l'enregistrement de qualité médiocre candidat.

6. Appareil (100) selon la revendication 5, l'unité de traitement (102) étant en outre configurée pour :
avant le tri des données de service par ordre chronologique du temps de génération de données de service, supprimer les données de service dont la valeur d'expérience de service d'utilisateur est supérieure à un troisième seuil prédéfini.

7. Appareil (100) selon l'une quelconque des revendications 5 et 6, l'unité de traitement (102) étant configurée pour obtenir, de la manière suivante, les enregistrements de qualité médiocre sur la base de l'enregistrement de qualité médiocre candidat identifié à partir de chaque groupe de données de service :
le regroupement des enregistrements de qualité médiocre candidats par l'identifiant de l'utilisateur, pour obtenir un enregistrement de qualité médiocre candidat de chaque utilisateur ;
l'identification d'un utilisateur de qualité médiocre sur la base de l'enregistrement de qualité médiocre candidat de chaque utilisateur ; et
l'utilisation des enregistrements de qualité médiocre candidats de tous les utilisateurs de qualité médiocre comme enregistrements de qualité médiocre.

8. Appareil (100) selon la revendication 7, l'unité de traitement (102) identifiant l'utilisateur de qualité médiocre sur la base de l'enregistrement de qualité médiocre candidat de chaque utilisateur de la manière suivante :
si une quantité d'enregistrements de qualité médiocre candidats d'un utilisateur dépasse un quatrième seuil prédéfini dans une fenêtre de temps spécifiée, et si une proportion de la quantité d'enregistrements de qualité médiocre candidats de l'utilisateur par rapport à toutes les données de service obtenues dans la fenêtre de temps dépasse un cinquième seuil prédéfini, l'identification de l'utilisateur comme étant un utilisateur de qualité médiocre ; ou
s'il existe un enregistrement de qualité médiocre candidat d'un même utilisateur dans chacune d'une quantité spécifiée de fenêtres temporelles consécutives, l'identification de l'utilisateur comme un utilisateur de qualité médiocre.

9. Support de stockage lisible par ordinateur comprenant des instructions qui, lorsqu ' elles sont exécutées par un ordinateur, amènent l'ordinateur à réaliser le procédé selon l'une quelconque des revendications 1 à 4.
